# EUROPEAN PATENT SPECIFICATION

(11) **EP 2 439 648 B1**
(45) Date of publication and mention of the grant of the patent: **02.12.2015**
(21) Application number: 09847008.1
(22) Date of filing: 10.12.2009
(51) Int. Cl.: G06F 13/00, G06F 13/10, G06F 9/44, G06F 9/445

(54) **AUTO START METHOD AND SYSTEM OF UNIVERSAL SERIAL BUS DATA CARD**
AUTOMATISCHES STARTVERFAHREN UND SYSTEM FÜR USB-DATENKARTE
PROCÉDÉ ET SYSTÈME D'AUTO-DÉMARRAGE DE CARTE DE DONNÉES À BUS SÉRIE UNIVERSEL

(30) Priority: 10.07.2009 CN 200910158526
(43) Date of publication of application: 11.04.2012
(73) Proprietor: ZTE Corporation, Shenzhen, Guangdong 518057 (CN)
(72) Inventor: WEI, Zhigang, Guangdong 518057 (CN)
(74) Representative: Manitz, Finsterwald & Partner GbR
(86) International application number: PCT/CN2009/075466
(87) International publication number: WO 2011/003257

(56) References cited:
- EP-A2- 1 975 770
- CN-A- 101 387 992
- JP-A- 2009 026 273
- US-A1- 2007 260 763
- US-B1- 6 762 771
- US-B1- 7 010 624

## Description

### Technical Field

The present invention relates to the technology of universal serial bus (USB) data card, and especially to an auto start method and system of USB data card. The features of the preamble of the independent claims are known from US 2007/260763 A and US 7010624 B1. Related technologies are also known from EP 1975770 A2.

### Background of the Related Art

With the popularization of laptops, the user's demand for wireless internet access by laptop is much greater. The most common way of wireless internet access by laptop is to use wifi, but the coverage rate of wifi is very low, and it is difficult to find a suitable wifi access point in public places, so the user's demand for the wireless data service is largely limited. The birth of 3G network makes it possible to access internet at all times and all places, and a wireless data card with USB interface becomes one of the best options to access internet for the laptop user. At present, China Mobile has already established the TD-SCDMA (TD for short) network, and the quantity demand of TD net card will be much greater, developing the products that meet the customization of the operators and meet the user's demand and are used more conveniently by users seems particularly important.

Compared with the traditional 2G data card, the transmission rate of the 3G wireless data card is higher and its functions are stronger, and the user only need to insert the data card into a USB slot of a PC, then it can realize the high speed wireless internet access, receiving and sending e-mails, surfing the internet and so on. In addition, using the self-owned driver program and software of the data card can also realize all of the functions in the mobile phone, for example, the users can make a call by using the headset in the PC, check the call records, receive and send messages, manage the contacts and so on. The wireless data card further has the function of USB Mass Storage Device, which supports an 8G micro SD card, so that the user can conveniently store documents and materials in the micro SD card. In addition, the wireless data card further has the auto start function, and when the data card is inserted into a PC for the first time, the PC identifies the data card as a CDROM in which the driver and software related to the data card are stored, which avoids the inconvenience that the data card must be carried with the driver installation CD when it is used in the PC.

However, the existing data card has the following problems:
1) The way of the auto start is unreasonable. Every time when the data card is inserted, no matter whether the driver software of the data card is installed in the PC or not, the PC identifies the data card as CDROM, and then switches CDROM to the normal mode of the data card.
2) The reliability of the auto start is low. The data card which is inserted into a PC each time will experience the switching from the CDROM to the normal state, and the switching action is initiated by the monitor thread of the PC side, and if the thread does not run due to the antivirus program and so on, it will cause that the data card can not enter the normal state.
3) There are few configurations of the data card. The "switching action" of said mode actually is informed to the data card by the "pop up" command of CDROM, and since the command cannot carry the parameters, the data card can only have two configurations: CDROM mode and the normal mode.
4) The configuration can not be switched dynamically. After the data card enters the normal mode, the user lacks the way of switching back to the CDROM state.
5) The adaptation of the multi-operation system is poor. There is no way to provide the function that the data card is identified as the different equipment when it is inserted into different operation systems, for example, the data card is expected to be identified as the RNDIS network card when the data card is inserted into Windows, while it is identified as the modem equipment when it is inserted into MAC.

### Summary of the Invention

The technical problem to be solved by the present invention is to provide an auto start method and system for the Universal Serial Bus (USB) data card, as defined in the independent claims. The method and system can improve the auto start speed of the data card and have a reliable performance, and there are extensive configurations of the data card which can be switched dynamically.

In order to solve the above problem, the present invention provides an auto start method for USB data card, comprising:
when a terminal detects that a data card is inserted, judging that the terminal does not install a driver of the data card, then using a default configuration mode to configure the data card and reading content of the data card to perform driver installation; the terminal having installed the driver of the data card, then using the driver of the data card to load the data card.

The default configuration mode is a CD mode,
when judging that the driver of the data card has not been installed, the terminal sends the configuration command of the default configuration mode to the data card, thereby identifying the data card as a CD.

After the terminal performs the driver installation, the method further comprises: sending a switching configuration command to the data card and switching the data card to a pre-specified configuration mode.

After the terminal performs the driver installation, the method further comprises: recording configuration mode information of the data card for a next start,
when the terminal judges that the driver of the data card has been installed, the method further comprises: reading recorded configuration mode information related to the data card to configure the data card.

There is a plurality of configuration modes configured in the data card, and after the terminal loads the data card, the method further comprises: the terminal sending the switching configuration command to the data card according to the configuration mode chosen by a user, and switching the data card to the configuration mode chosen by the user.

The terminal sending the switching configuration command to the data card, and switching the data card to the configuration mode chosen by the user specifically comprises:
the terminal sending a configuration command of unloading equipment mode to the data card, and the data card unloading all interface equipment of a current configuration mode;
the terminal sending the configuration command of the configuration mode chosen by the user to the data card, and the data card establishing the interface equipment corresponding to the configuration mode chosen by the user.

An auto start system for USB data card, comprising a terminal and a data card,
the terminal, configured to judge whether a driver of the data card has been installed in the terminal when detecting that the data card has been inserted, and use a default configuration mode to configure the data card if the driver of the data card has not been installed in the terminal, and read content of the data card to perform driver installation; to use the driver of the data card to load the data card if the driver of the data card has been installed in the terminal;
the data card is configured to provide the data to the terminal.

The data card is further configured to configure a plurality of configuration modes, wherein the default configuration mode is a CD mode;
the terminal is further configured to send a configuration command of the default configuration mode to the data card and identify the data card as a CD when judging the driver of the data card has not installed in the terminal.

The terminal is further configured to send a switching configuration command to the data card after performing the driver installation, and switch the data card to a pre-specified configuration mode.

The terminal is further configured to record configuration mode information of the data card for a next start after performing the driver installation; and read the recorded configuration mode information related to the data card to configure the data card when judging the driver of the data card has been installed.

The data card is further configured to configure a plurality of configuration modes;
the terminal further is configured to send the switching configuration command to the data card according to the configuration mode chosen by a user after loading the data card, and switch the data card to the configuration mode chosen by the user.

The terminal is further configured to send a configuration command of unloading equipment mode to the data card; and send the configuration command of the configuration mode chosen by the user to the data card;
the data card is further configured to unload all interface equipment of a current configuration mode after receiving the configuration command of unloading equipment mode from the terminal; and establish the interface equipment corresponding to the configuration mode chosen by the user after receiving the configuration command of the configuration mode chosen by the user from the terminal.

The auto start method and system of USB data card is provided by the present invention, and the data card provides a plurality of configurations for the terminal to choose, and the default configuration of the terminal system is set to CD mode, thereby in the process of the auto start, using the feature of the default configuration of the terminal system to identify the data card as the CD and perform the driver installation. After the driver installation, the terminal writes the configuration mode information of the data card for the next start into the registry, such that the data card is configured by using the configuration mode stored in the registry when the data card is inserted again, thereby avoiding entering CDROM mode for each start of the data card. According to the present invention, after a PC finishes installing the related driver and software, the data card can start directly by the normal configuration without going through the switching process when it is inserted again, so the present invention can improve the auto start speed of the data card; and which kind of configuration is used to start the data card depends on static configuration values in the registry and the extra "monitor thread" used for monitoring is not needed, which solves the problem that the data card cannot enter the normal state due to the failure of the "monitor thread" start, therefore the performance of the invention is reliable; and the present invention provides a means for switching configuration for the users and the means is used more flexibly, and the users can switch freely in different configuration modes, so there are extensive data card configurations and the configuration can be dynamically switched.

### Brief Description of Drawings

FIG. 1 is a flow chart of the auto start method for USB data card according to the present invention;
FIG. 2 is a flow chart of the auto start and auto installation of the data card inserted into PC for the first time according to the present invention;
FIG.3 is a flow chart of enumerating the equipment of the data card in the condition of having installed the driver in PC according to the present invention;
FIG.4 is a flow chart of the dynamical switching configuration of the data card in the process of use in the example 3 according to the present invention.

### Preferred Embodiments of the Present Invention

The present invention provides an auto start method for USB data card, wherein, the data card provides a plurality of configurations for the terminal to choose, and the default configuration of the terminal system is set to CD mode, thereby in the process of the auto start, using the feature of the default configuration of the terminal system to identify the data card as CD and perform the driver installation. After the driver installation, the terminal writes the configuration mode information of the data card for the next start into the registry, which is generally a non-CDROM mode, such that the data card is configured by using the configuration mode stored in the registry when the data card is inserted again, thereby avoiding entering the CDROM mode for each start of the data card.

The configuration is carried out as needed according to a plurality of configuration modes provided by the data card, for example, it can provide 4 configuration modes to choose (configuration 0 is invisible to the users), which are respectively shown in table 1, including configuration 1, configuration 2, configuration 3 and configuration 4:

**TABLE 1**

| Configuration NO. | Name | Function |
|---|---|---|
| 0 | Unloading equipment mode | Unload all the interface equipment |
| 1 | CDROM mode | 1×CDROM |
| 2 | Full function mode | 2 × serial ports+1 × modem+1 × RNDIS+1×USB flash disk |
| 3 | High-speed modem mode | 2×serial ports+1×modern |
| 4 | High-speed Rndis mode | 2×serial ports+1 ×RNDIS |

Wherein, the configuration 0 is the unloading equipment mode, and after the data card receives the configuration command of configuration 0 (set config 0), all the interface equipment of the data card is unloaded; the configuration 1 is the CDROM mode, and after the data card receives the configuration command of the configuration 1 (set config 1), the CDROM interface equipment is established ; the configuration 2 is the full function mode, and after the data card receives the configuration command of the configuration 2 (set config 2), all the interface equipment of the data card is established, including a serial port, modem, Remote Network Driver Interface Specification (Rndis) interface and USB flash disk interface; the configuration 3 is the high speed modem mode, and after the data card receives the configuration command (set config 3) of the configuration 3, the serial port and modem interface equipment are established; the configuration 4 is the high speed Rndis mode, and after the data card receives the configuration command (set config4) of the configuration 4, the serial port and Rndis interface equipment are established. For other data cards (for example, the data card including more interface equipment), their configuration modes are configured correspondingly, and the table 1 is just an example. By configuring a plurality of modes, some unnecessary interfaces in some modes can be removed, thereby improving the bandwidth utilization rate of USB.

In the process of usage, the user also can use the configuration switching interface provided by the terminal, for example, the Graphical User Interface (GUI) software can be used for implementation, and switching are carried out among 1∼4 configuration modes. The user can easily switch to the CDROM state for reinstallation when they would like to reinstall the PC-end software of the data card.

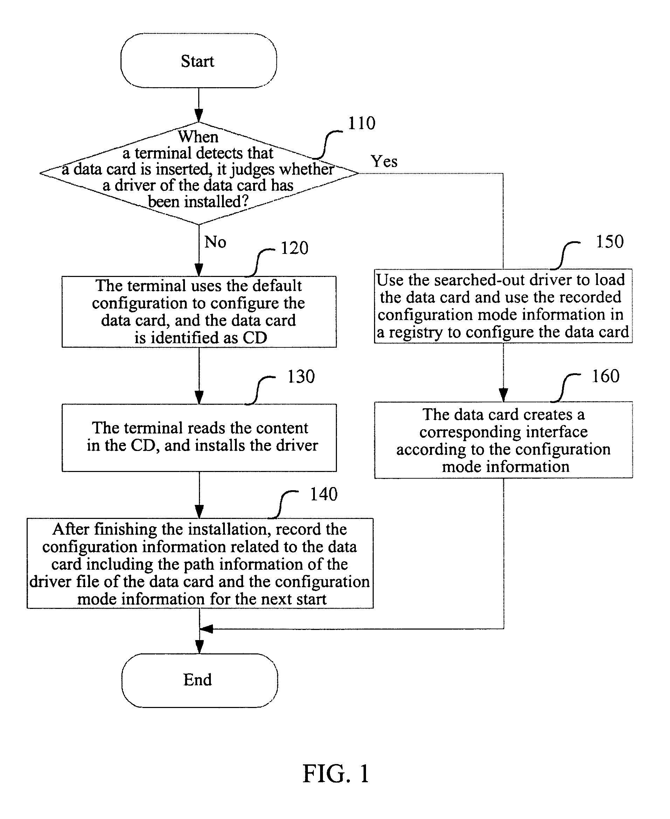

FIG.1 is a flow chart of an auto start method of the USB data card according to the present invention, and as shown in FIG.1, the auto start method of USB data card provided by the present invention includes the following steps:
Step 110: when a terminal detects that a data card is inserted, it judges whether the driver of the data card has been installed in the terminal according to the equipment descriptor reported by the data card, and if not installed, proceed to the step 120, otherwise, proceed to the step 150.

Herein, the terminal can be the PC or other equipment, and the equipment descriptor includes the vendor identity (VID) and product identity (PID) numbers of the data card. Judging whether the driver of the data card has been installed in the terminal is: looking up whether there is the corresponding driver in the registry according to the equipment descriptor.

Step 120: the terminal uses the default configuration mode to configure the data card, and sends the configuration command of the default configuration to the data card, for example, the data card is configured to be in the CDROM form, that is, the data card is identified as CDROM.

The default configuration is usually the configuration 1, and in the data card, the default configuration (configuration 1) is set to be CDROM mode, such that the data card can be identified in the form of CDROM when it is inserted for the first time.

Step 130: the terminal reads the content in the CD (the data card), runs the installation program in the CD, and installs the driver of the data card and the related software.

The data card is identified as the CDROM equipment when it is inserted into PC for the first time, and the CDROM contains the driver and software required by the data card in the normal use.

Step 140: after installation has been finished, the terminal records the configuration information related to the data card in the registry, including the path of the driver file of the data card and the configuration mode information of the data card for the next start (e.g. the full function mode, i.e. the configuration 2), and the configuration mode information can be represented by the configuration number, and the flow ends.

Step 150: the terminal finds the corresponding driver in the registry to load the data card according to the equipment descriptor reported by the data card, and reads the recorded configuration mode information related to the data card in the registry (e.g. the full function mode, i.e. configuration 2) to configure the data card, and sends the configuration command to the data card.

Step 160: the data card establishes the corresponding interface according to the configuration mode information in the registry and configures the corresponding configuration mode (for example, the full function mode), and enumerates all of the interfaces and the flow ends.

After the above steps, the data card has been installed successfully, and the user can use the user operation interface of data card of the terminal side (for example, using the GUI software for implementation) to perform the operations such as surfing the internet, receiving and sending the messages, making calls, operating the USB flash disk and so on.

The present invention can be further described in details through the specific examples below.

### Example 1

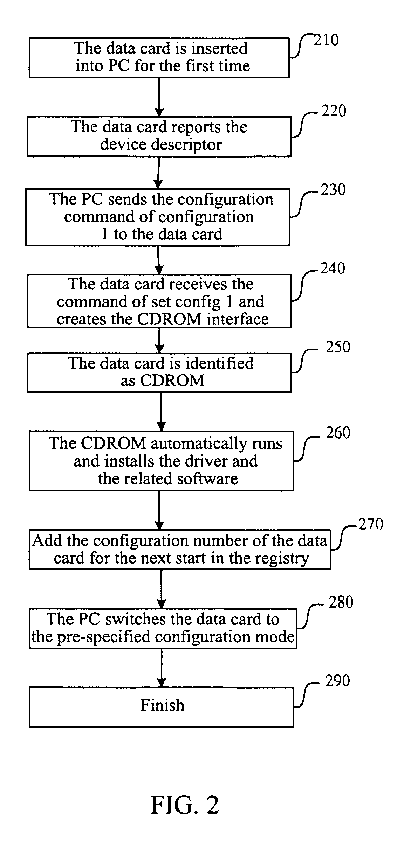

FIG. 2 is a flow chart of the auto start and auto installation of the data card that is inserted into PC for the first time according to th present invention, and as shown in FIG.2, the process of the auto start and auto installation of the data card that is inserted into PC for the first time according to the present invention includes:
step 210: the data card is inserted into PC for the first time, and the PC detects that the data card is inserted, entering the enumeration process of USB equipment.
Step 220: in the process of the enumeration, the data card reports the equipment descriptor, wherein the equipment descriptor contains the VID and PID numbers of the data card.
Step 230: the PC looks up the driver in the registry according to the VID and PID numbers, and since the driver and software of the data card have not been installed in PC, the system can not find the driver corresponding to the PID and VID numbers in the registry. In this situation, the PC will send the configuration command of the configuration 1 (set config 1) to the data card.
Step 240 : after the data card receives the configuration command of set config 1, according to the configuration in the table 1, it establishes the CDROM interface, and the configuration, interface and endpoint descriptor related to the mass storage.
Step 250 : the data card finishes the enumeration process, and it is identified as the CDROM by PC.
Step 260 : if the PC enables the function of "auto run", thus it installs automatically the driver of the data card and the related software in CDROM.
Step 270: in the process of driver installation, add the variable UsbConfigNum in the subkey named after the VID and PID numbers in the registry (for example, the subkey of the data card is vid_19d2&pid_00xx, if the VID is 19d2 and the PID is 00xx), and the variable records the configuration number of the data card for the next start.

For example, if the data card is expected to start in the full function mode next time, then UsbConfigNum =2. The configuration number can also be other values, for instance, the data card is expected to start in the high speed modem mode next time, then UsbConfigNum =3.

The UsbConfigNum is a DWORD (double-byte) variable, and it can be other types of variables.

Step 280 : after the process of the auto start and auto installation is finished, the PC sends the switching configuration command to the data card and switches the data card to the pre-specified configuration mode (for instance, the configuration 2 or other modes certainly, which is not limited by the present invention). The specific switching configuration method is shown in example 3.

Step 290: the installation process of the data card ends.

### Example 2

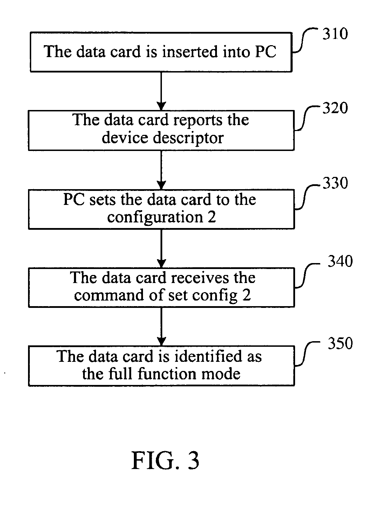

FIG.3 is a flow chart of enumerating the equipment of the data card according to the present invention in the condition of PC having installed the driver, and as shown in FIG.3, after the PC installs the driver and the related software, when the data card is inserted again, the data card will not start in the form of CDROM, and it is configured directly by using the configuration mode stored in the registry, and the specific steps are shown as follows:
Step 310: the data card is inserted into PC and powered on, and it enters the enumeration process.
Step 320: in the process of enumeration, the data card reports the equipment descriptor, wherein the equipment descriptor contains the VID and PID numbers of the data card.
Step 330: PC looks up the driver in the registry according to the VID and PID numbers, and taking the data card of which the vid is 19d2 and the pid is 00 as an example, in the subkey vid_19d2&pid_00xx, it finds the variable UsbConfigNum of DWORD type and sends the value of the variable to the data card by the command of set config , and if the value of UsbConfigNum is 2, the PC sends the configuration command of set config 2 to the data card.
Step 340: after receiving the configuration command of set config 2, according to the configuration in the table 1, the data card establishes the serial port, modem interface, RNDIS interface and USB flash disk interface in the full function mode and the related configuration, interface and endpoint descriptor.
Step 350: the enumeration process is finished, and the data card is identified as the full function mode.

The user can open the user operation interface of the data card (can be realized by GUI software), and use the data card to perform the functions such as surfing the internet, receiving and sending the messages and so on.

### Example 3

In the process of usage, the user can dynamically switch the configuration of the data card, which is generally that the terminal sends the configuration command of the unloading equipment mode to the data card, and said data card unloads all the interface equipment of the current configuration mode; the terminal sends the configuration command of the configuration mode chosen by the user to the data card, and the data card establishes the interface equipment corresponding to the configuration mode chosen by the user, and the example takes switching the configuration 2 to the configuration 1 as the example.

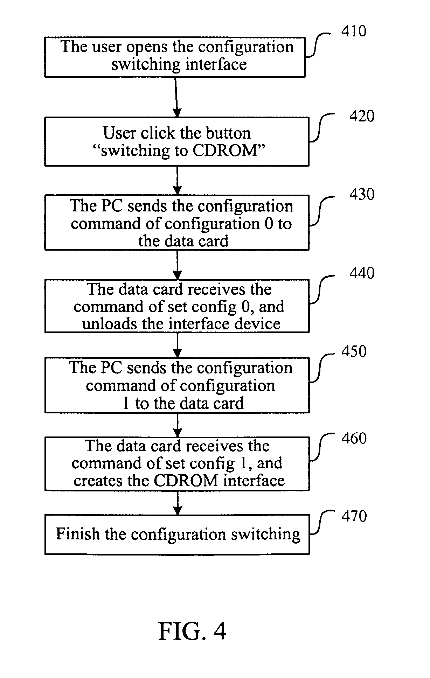

FIG.4 is a flow chart of the dynamical switching configuration of the data card in the process of the usage in the example 3 according to the present invention, and as shown in FIG.4, the specific steps of the example 3 of the present invention are as follows:
Step 410: the user opens the configuration switching interface in the terminal.
Step 420: suppose that the data card is working in the configuration 2 at present, and when the user needs to switch it to the configuration 1, the user can click the button "switching to CDROM" in the configuration switching interface.
Step 430: in the event response of the button, the PC sends the command of set config 0 to the data card by the USB interface.
Step 440: after receiving the command of set config 0, according to the configuration in the table 1, the data card unloads all of the interface equipment in the current-configuration 2 and changes the USB equipment state into addressed state, and the data card will re-enter the process of enumeration.
Step 450: the PC sends the configuration command of set config 1 to the data card.
Step 460: after receiving the configuration command of set config 1, according to the configuration in the table 1, the data card establishes the CDROM interface and the configuration, interface and endpoint descriptor related to mass storage.
Step 470: after the enumeration is finished again, the user can see the CDROM equipment and the switching succeeds.

The switching between other configuration modes is similar to the above flow, and it will not be repeated here.

The present invention further provides an auto start system of the universal serial bus data card, including the terminal and the data card, wherein:
the data card is used to configure a plurality of configuration modes, and the default configuration mode of the data card is the CD mode, and the driver and program related to the data card is stored therein;
the terminal is used to judge whether the driver of the data card has been installed in the terminal when it detects that the data card is inserted, and if not installed, use the default configuration mode to configure the data card, identify the data card as CD and read the CD content from the data card to install the driver; if installed, use the driver of said data card to load the data card. Furthermore, the terminal is further used to send the configuration command of the default configuration mode to the data card when it judges that the driver of the data card has not been installed, and identify the data card as CD.

Wherein, the terminal is further used to send the switching configuration command to the data card after installing the driver, and switch the data card to the pre-specified configuration mode.

Wherein, the terminal is further used to record the configuration mode information of the data card for the next start after installing the driver; further used to read the recorded configuration mode information of the data card for the next start in the registry when it judges that the driver of the data card has been installed, and configure the data card according to the configuration mode information.

Wherein, the terminal is further used to send the switching configuration command to the data card according to the configuration mode chosen by the user after loading the data card, and switch the data card to the configuration mode chosen by the user.

According to the above description, compared with the prior art, the present invention has the following advantages:
1) The start speed is high. After the PC finishes installing the related driver and software, the data card can directly start by the normal configuration and does not need to experience the process of switching when it is inserted again.
2) The start is stable. Which configuration is used to start the data card depends on the static configuration value in the registry, and the extra "monitor thread" used for monitoring is not needed, which solves the problem that the data card cannot enter the normal state due to the failure of the "monitor thread" start.
3) Provide a means for switching configuration for the user and the means is used more flexibly, and the user can switch freely in all sorts of configuration modes.
4) Provide a means for improving the performance of the data card. By designing all sorts of the configuration modes of the data card meticulously, it cuts the unnecessary interfaces, for example, the mode of the "high-speed Modem network access" in the configuration 3, and in the mode, it removes the unnecessary RNDIS interface and USB flash disk interface and improves the bandwidth utilization rate of USB.
5) Designing different configuration schemes for different operation systems. For example, the user expects that the data card can surf the internet through the Ethernet mode of RNDIS in Windows, and the mac operation system does not support RNDIS, thus the data card of RNDIS cannot be used in the mac operation system. The data card of the present invention solves the problem well by using multi-configuration, and it can put RNDIS into a configuration a and put the modem mode supported by mac into a configuration b, and the data card uses the configuration a if it is inserted into Windows and uses the configuration b if it is inserted into Mac, thereby enlarging the scope of usage and marketing scope of the data card.

The above description is just the preferred examples of the present invention, which is not used to limit the protection scope of the present invention.

## Claims

1. An auto start method for a universal serial bus, USB, data card, the method comprising:
when a terminal detects that a data card is inserted, the terminal judging (110) whether the terminal has installed a driver of the data card;
wherein
if the terminal has not installed the driver of the data card, the terminal using (120) a CDROM mode as a default configuration mode to configure the data card, sending (120) a configuration command of the default configuration mode to the data card to identify the data card as a CDROM, reading (130) content of the data card to perform driver installation, and recording (140) configuration mode information of the data card for a next start after performing the driver installation;
if the terminal has installed the driver of the data card, the terminal using (150) said installed driver to load the data card, and then reading (150) the recorded configuration mode information related to the data card to configure the data card.

2. The method according to claim 1, wherein after the terminal performs the driver installation, the method further comprises: sending a switching configuration command to the data card and switching the data card to a pre-specified configuration mode.

3. The method according to claim 1, wherein there is a plurality of configuration modes configured in the data card, and after the terminal loads the data card, the method further comprises: the terminal sending a switching configuration command to the data card according to the configuration mode chosen by a user, and switching the data card to the configuration mode chosen by the user.

4. The method according to claim 3, wherein the terminal sending the switching configuration command to the data card and switching the data card to the configuration mode chosen by the user specifically comprises:
the terminal sending a configuration command of unloading equipment mode to the data card, and the data card unloading all interface equipment of a current configuration mode;
the terminal sending the configuration command of the configuration mode chosen by the user to the data card, and the data card establishing the interface equipment corresponding to the configuration mode chosen by the user.

5. An auto start system for a USB data card, comprising a terminal and a data card,
the terminal is configured to judge whether the terminal has installed a driver of the data card when detecting that the data card is inserted;
wherein
the terminal is configured to, if the terminal has not installed the driver of the data card, use a CDROM mode as a default configuration mode to configure the data card, send a configuration command of the default configuration mode to the data card to identify the data card as a CDROM, read content of the data card to perform driver installation, and record configuration mode information of the data card for a next start after performing the driver installation;
the terminal is configured to, if the terminal has installed the driver of the data card, to use said installed driver to load the data card, and then read the recorded configuration mode information related to the data card to configure the data card;
the data card is configured to store driver and program related to the data card.

6. The system according to claim 5, wherein
the terminal is further configured to send a switching configuration command to the data card after performing the driver installation, and switch the data card to a pre-specified configuration mode.

7. The system according to claim 5, wherein
the data card is further configured to configure a plurality of configuration modes;
the terminal is further configured to send a switching configuration command to the data card according to the configuration mode chosen by a user after loading the data card, and switch the data card to the configuration mode chosen by the user.

8. The system according to claim 7, wherein
the terminal is further configured to send a configuration command of unloading equipment mode to the data card; and send the configuration command of the configuration mode chosen by the user to the data card;
the data card is further configured to unload all interface equipment of a current configuration mode after receiving the configuration command of the unloading equipment mode from the terminal; and to establish the interface equipment corresponding to the configuration mode chosen by the user after receiving the configuration command of the configuration mode chosen by the user from the terminal.

## Patentansprüche

1. Verfahren eines automatischen Starts für eine Universal Serial Bus-Datenkarte, USB-Datenkarte, wobei das Verfahren umfasst, dass:
wenn ein Endgerät detektiert, dass eine Datenkarte eingesetzt ist, das End-gerät beurteilt (110), ob an dem Endgerät ein Treiber der Datenkarte installiert ist;
wobei
wenn der Treiber der Datenkarte nicht an dem Endgerät installiert ist, das Endgerät einen CDROM-Modus als voreingestellten Konfigurationsmodus zum Konfigurieren der Datenkarte verwendet (120), einen Konfigurationsbefehl des voreingestellten Konfigurationsmodus an die Datenkarte sendet (120), um die Datenkarte als CDROM zu identifizieren, einen Inhalt der Datenkarte liest (130), um eine Treiberinstallation durchzuführen, und eine Konfigurationsmodusinformation der Datenkarte für einen nächsten Start nach dem Durchführen der Treiberinstallation aufzeichnet (140);
wenn der Treiber der Datenkarte an dem Endgerät installiert ist, das Endgerät den installierten Treiber verwendet (150), um die Datenkarte zu laden, und dann die aufgezeichnete Konfigurationsmodusinformation, die mit der Datenkarte in Verbindung steht, liest (150), um die Datenkarte zu konfigurieren.

2. Verfahren nach Anspruch 1,
wobei das Verfahren ferner umfasst, dass, nachdem das Endgerät die Treiberinstallation durchgeführt hat: ein Konfigurationswechselbefehl an die Datenkarte gesendet wird und die Datenkarte in einen vorab spezifizierten Konfigurationsmodus wechselt.

3. Verfahren nach Anspruch 1,
wobei es eine Vielzahl von Konfigurationsmodi gibt, die in der Datenkarte konfiguriert sind, und das Verfahren ferner umfasst, dass, nachdem das Endgerät die Datenkarte geladen hat: das Endgerät gemäß dem durch einen Benutzer gewählten Konfigurationsmodus einen Konfigurationswechselbefehl an die Datenkarte sendet und die Datenkarte in den durch den Benutzer gewählten Konfigurationsmodus wechseln lässt.

4. Verfahren nach Anspruch 3,
wobei das Senden des Konfigurationswechselbefehls an die Datenkarte und der Wechsel der Datenkarte in den durch den Benutzer gewählten Konfigurationsmodus durch das Endgerät im Speziellen umfasst, dass:
das Endgerät einen Konfigurationsbefehl eines Gerätedeaktivierungsmodus an die Datenkarte sendet und die Datenkarte alle Schnittstellengeräte eines aktuellen Konfigurationsmodus deaktiviert;
das Endgerät den Konfigurationsbefehl des durch den Benutzer gewählten Konfigurationsmodus an die Datenkarte sendet und die Datenkarte das Schnittstellengerät, das dem durch den Benutzer gewählten Konfigurationsmodus entspricht, festlegt.

5. System eines automatischen Starts für eine USB-Datenkarte, umfassend ein Endgerät und eine Datenkarte,
wobei das Endgerät ausgestaltet ist, um zu beurteilen, ob an dem Endgerät ein Treiber der Datenkarte installiert ist, wenn detektiert wird, dass die Datenkarte eingesetzt ist;
wobei
das Endgerät ausgestaltet ist, um, wenn der Treiber der Datenkarte nicht an dem Endgerät installiert ist, einen CDROM-Modus als voreingestellten Konfigurationsmodus zum Konfigurieren der Datenkarte zu verwenden, einen Konfigurationsbefehl des voreingestellten Konfigurationsmodus an die Datenkarte zu senden, um die Datenkarte als CDROM zu identifizieren, einen Inhalt der Datenkarte zu lesen, um eine Treiberinstallation durchzuführen, und eine Konfigurationsmodusinformation der Datenkarte für einen nächsten Start nach dem Durchführen der Treiberinstallation aufzuzeichnen;
das Endgerät ausgestaltet ist, um, wenn der Treiber der Datenkarte an dem Endgerät installiert ist, den installierten Treiber zu verwenden, um die Datenkarte zu laden, und dann die aufgezeichnete Konfigurationsmodusinformation, die mit der Datenkarte in Verbindung steht, zu lesen, um die Datenkarte zu konfigurieren;
die Datenkarte ausgestaltet ist, um einen Treiber und ein Programm, die mit der Datenkarte in Verbindung stehen, zu speichern.

6. System nach Anspruch 5,
wobei das Endgerät ferner ausgestaltet ist, um einen Konfigurationswechselbefehl an die Datenkarte zu senden, nachdem die Treiberinstallation durchgeführt wurde, und die Datenkarte in einen vorab spezifizierten Konfigurationsmodus wechseln zu lassen.

7. System nach Anspruch 5,
wobei die Datenkarte ferner ausgestaltet ist, um eine Vielzahl von Konfigurationsmodi zu konfigurieren;
das Endgerät ferner ausgestaltet ist, um gemäß dem durch einen Benutzer gewählten Konfigurationsmodus einen Konfigurationswechselbefehl an die Datenkarte zu senden, nachdem die Datenkarte geladen wurde, und die Datenkarte in den durch den Benutzer gewählten Konfigurationsmodus wechseln zu lassen.

8. System nach Anspruch 7,
wobei das Endgerät ferner ausgestaltet ist, um einen Konfigurationsbefehl eines Gerätedeaktivierungsmodus an die Datenkarte zu senden; und den Konfigurationsbefehl des durch den Benutzer gewählten Konfigurationsmodus an die Datenkarte zu senden;
die Datenkarte ferner ausgestaltet ist, um alle Schnittstellengeräte eines aktuellen Konfigurationsmodus zu deaktivieren, nachdem der Konfgurationsbefehl des Gerätedeaktivierungsmodus von dem Endgerät empfangen wurde; und um das Schnittstellengerät, das dem durch den Benutzer gewählten Konfigurationsmodus entspricht, nach dem Empfangen des Konfigurationsbefehls des durch den Benutzer gewählten Konfigurationsmodus von dem Endgerät festzulegen.

## Revendications

1. Procédé d'auto-démarrage pour une carte de données de type USB (bus série universel), le procédé comprenant les étapes suivantes :
quand un terminal détecte qu'une carte de données est insérée, le terminal juge (110) si le terminal a installé un pilote de la carte de données ; de sorte que
si le terminal n'a pas installé le pilote de la carte de données, le terminal utilise (120) un mode CD-ROM à titre de mode de configuration par défaut afin de configurer la carte de données, il envoie (120) un ordre de configuration du mode de configuration par défaut à la carte de données pour identifier la carte de données comme un CD-ROM, il lit (130) le contenu de la carte de données pour exécuter l'installation d'un pilote, et il enregistre (140) une information de mode de configuration de la carte de données pour un départ suivant après avoir exécuté l'installation du pilote ;
si le terminal a installé le pilote de la carte de données, le terminal utilise (150) ledit pilote installé pour charger la carte de données, et il lit ensuite (150) l'information de mode de configuration enregistrée en relation avec la carte de données afin de configurer la carte de données.

2. Procédé selon la revendication 1, dans lequel, après que le terminal a exécuté l'installation du pilote, le procédé comprend en outre l'envoi d'un ordre de configuration de commutation à la carte de données et la commutation de la carte de données vers un mode de configuration préalablement spécifié.

3. Procédé selon la revendication 1, dans lequel il existe une pluralité de modes de configuration configurés dans la carte de données et, après que le terminal a chargé la carte de données, le procédé comprend en outre : l'envoi par le terminal d'un ordre de configuration de commutation à la carte de données en accord avec le mode de configuration choisi par un utilisateur, et la commutation de la carte de données vers le mode de configuration choisi par l'utilisateur.

4. Procédé selon la revendication 3, dans lequel l'envoi par le terminal de l'ordre de configuration de commutation à la carte de données et la commutation de la carte de données vers le mode de configuration choisi par l'utilisateur comprennent de manière spécifique :
l'envoi par le terminal d'un ordre de configuration d'un mode de déchargement d'équipement à la carte de données, et le déchargement par la carte de données de tout équipement interface d'un mode de configuration actuel ;
l'envoi par le terminal de l'ordre de configuration du mode de configuration choisi par l'utilisateur à la carte de données, etc l'établissement par la carte de données de l'équipement interface correspondant au mode de configuration choisi par l'utilisateur.

5. Système d'auto-démarrage pour une carte de données du type USB, comprenant un terminal et une carte de données,
le terminal étant configuré pour juger si le terminal a installé un pilote de la carte de données lorsqu'il détecte que la carte de données est insérée ;
dans lequel
le terminal est configuré pour, si le terminal n'a pas installé le pilote de la carte de données, utiliser un mode CD-ROM à titre de mode de configuration par défaut afin de configurer la carte de données, envoyer un ordre de configuration du mode de configuration par défaut à la carte de données pour identifier la carte de données comme un CD-ROM, lire le contenu de la carte de données pour exécuter l'installation du pilote, et enregistrer une information de mode de configuration de la carte de données pour un démarrage suivant après avoir exécuté l'installation du pilote ;
le terminal est configuré pour, si le terminal a installé le pilote de la carte de données, utiliser ledit pilote installé pour charger la carte de données, et ensuite lire l'information de mode de configuration enregistrée en relation avec la carte de données pour configurer la carte de données ;
la carte de données étant configurée pour stocker un pilote et un programme en relation avec la carte de données.

6. Système selon la revendication 5, dans lequel
le terminal est en outre configuré pour envoyer un ordre de configuration de commutation à la carte de données après avoir exécuté l'installation du pilote, et pour commuter la carte de données vers un mode de configuration préalablement spécifié.

7. Système selon la revendication 5, dans lequel
la carte de données est en outre configurée pour configurer une pluralité de modes de configuration ;
le terminal est en outre configuré pour envoyer un ordre de configuration de commutation à la carte de données en accord avec le mode de configuration choisi par un utilisateur après le chargement de la carte de données, et pour commuter la carte de données vers le mode de configuration choisi par l'utilisateur.

8. Système selon la revendication 7, dans lequel
le terminal est en outre configuré pour envoyer un ordre de configuration d'un mode de déchargement d'équipement à la carte de données ; et pour envoyer l'ordre de configuration du mode de configuration choisi par l'utilisateur à la carte de données ;
la carte de données est en outre configurée pour décharger tout équipement interface d'un mode de configuration actuel après avoir reçu l'ordre de configuration du mode de déchargement d'équipement depuis le terminal ; et pour établir l'équipement interface correspondant au mode de configuration choisi par l'utilisateur après avoir reçu l'ordre de configuration du mode de configuration choisi par l'utilisateur depuis le terminal.
